# EUROPÄISCHE PATENTSCHRIFT

(11) **EP 2 567 837 B1**
(45) Veröffentlichungstag und Bekanntmachung des Hinweises auf die Patenterteilung: **03.08.2016**
(21) Anmeldenummer: 12183767.8
(22) Anmeldetag: 10.09.2012
(51) Int. Cl.: B60D 1/62, B60D 1/24

(54) **TRÄGEREINHEIT**
CARRIER UNIT
UNITÉ DE SUPPORT

(30) Priorität: 12.09.2011 DE 102011053505
(43) Veröffentlichungstag der Anmeldung: 13.03.2013
(73) Patentinhaber: Scambia Holdings Cyprus Limited, 3106 Limassol (CY)
(72) Erfinder: Gentner, Wolfgang, 71711 Steinheim (DE); Wegner, Bert, 73333 Gingen (DE); Riehle, Jörg, 71679 Asperg (DE)
(74) Vertreter: Hoeger, Stellrecht & Partner Patentanwälte mbB

(56) Entgegenhaltungen:
- EP-A2- 1 199 547
- AU-A1- 2008 264 181
- DE-A1- 10 154 733
- US-A- 4 319 766
- US-A1- 2010 076 673

## Beschreibung

Die Erfindung betrifft eine Trägereinheit für Kraftfahrzeuge, umfassend eine an einem Heckbereich des Kraftfahrzeugs montierbare Tragstruktur.

Bei derartigen Trägereinheiten besteht das Problem, dass die auf diese Trägereinheiten wirksamen Lasten erfasst werden sollten, um damit beispielsweise einem Fahrer anzeigen zu können, ob die auf die Tragstruktur wirkenden Lasten zu groß sind, vernachlässigbar, zu klein, das heißt negativ, sind oder noch in einem tolerablen Bereich liegen, der die Fahreigenschaften des Kraftfahrzeugs in tolerablem Maße beeinflusst. Eine gattungsgemäße Trägereinheit ist in der US 4,319,766 gezeigt.

Der Erfindung liegt daher die Aufgabe zugrunde, eine Trägereinheit für Kraftfahrzeuge der eingangs beschriebenen Art dahingehend zu verbessern, dass die auf die Tragstruktur einwirkenden Lasten erfasst werden können.

Diese Aufgabe wird bei einer Trägereinheit der eingangs beschriebenen Art erfindungsgemäß durch die Merkmale des Anspruchs 1 gelöst.

Der Vorteil der erfindungsgemäßen Lösung ist darin zu sehen, dass mit dieser eine einfache Möglichkeit geschaffen wurde, die aufgenommene Last zu erfassen, ohne dass ein großer technologischer Aufwand getrieben werden muss.

Insbesondere bietet die Sensorbasis die Möglichkeit, die Bewegungen der Montagebereiche des Tragstrukturabschnitts auf eine Bewegung von Messstellen umzusetzen, deren Bewegung einfach durch die Sensoreinheit erfassbar ist, insbesondere da die Montagebereiche und somit auch die Fixierbereiche durch die vorgesehene Sensorbasis so angeordnet werden können, dass sie einen ausreichend großen Abstand voneinander aufweisen und somit eine ausreichend große elastische Deformation des zwischen diesen liegenden und diese umfassenden Transformationsbereichs erfasst werden kann.

Dies ist ein Vorteil, im Gegensatz zu den bislang bekannten Sensoren die Relativbewegungen sehr kleiner und in geringem Abstand voneinander angeordneter Bereiche erfassen, wodurch eine große Fehleranfälligkeit der Messung entsteht und folglich das Messergebnis nicht in dem gewünschten Maße zuverlässig und reproduzierbar ist.

Hinsichtlich der erfassten Bewegungen der Montagebereiche wurden dabei keine näheren Angaben gemacht.

Eine vorteilhafte Lösung sieht vor, dass die Bewegungen der Montagebereiche durch eine elastische Verbiegung des Tragstrukturabschnitts bedingte und in einer Ebene erfolgende Translations- und Rotationsbewegungen der Montagebereiche und somit auch der Fixierbereiche relativ zueinander umfassen.

Das heißt, dass durch die Ausbildung der Sensorbasis primär die in einer Ebene erfolgenden Translations- und Rotationsbewegungen erfasst werden, während quer zu dieser Ebene erfolgende Translations- und Rotationsbewegungen sich in geringerem Maße auf die Bewegung der Messstellen auswirken oder nur zu nicht relevanten Bewegungen der Messstellen führen.

Besonders vorteilhaft ist es dabei, wenn der Transformationsbereich der Sensorbas is unabhängig von dem zwischen den Montagebereichen liegenden Zwischenbereich des Tragstrukturabschnitts bewegbar ist.

Das heißt, dass sich die Bewegung des Zwischenbereichs des Tragstrukturabschnitts nicht direkt auf die Bewegung des Transformationsbereichs auswirkt, sondern dass der Transformationsbereich nur durch die Relativbewegungen der Montagebereiche und somit der Fixierbereiche der Sensorbasis beeinflusst wird, während die Bewegungen des Zwischenbereichs des Tragstrukturabschnitts, die zwar mit den Bewegungen der Montagebereiche zusammenhängen, sich nicht direkt auf den Transformationsbereich auswirken, sondern nur über die Bewegungen der Montagebereiche auswirken.

Diese Lösung hat den großen Vorteil, dass damit die Bewegungen des Transformationsbereichs die Relativbewegungen der voneinander entfernten Montageabschnitte in Bewegungen der Messstellen transformieren und somit in stärkerem Maße transformieren als bei einer unmittelbaren Verbindung zwischen dem Transformationsbereich und dem Zwischenbereich.

Hinsichtlich der Ausbildung der Sensorbasis wurden bislang keine näheren Angaben gemacht.

Beispielsweise könnte die Sensorbasis beliebige Formen aufweisen, solange diese zu einer vorteilhaft messbaren Bewegung der Messstellen führt.

Eine aufgrund der Einfachheit besonders vorteilhafte Lösung sieht vor, dass die Sensorbasis plattenförmig ausgebildet ist und sich in einer Sensorbasisfläche erstreckt.

Damit erstrecken sich sowohl die Fixierbereiche als auch der zwischen den Fixerbereichen liegende Transformationsbereich in der Sensorbasisfläche.

In diesem Fall ist vorzugsweise vorgesehen, dass der Transformationsbereich der Sensorbasis Bewegungen der Fixierbereiche um quer oder senkrecht zur Sensorbasisfläche verlaufende Drehachsen in Bewegungen der Messstellen des Transformationsbereichs relativ zueinander umsetzt, das heißt, dass derartige Rotations- oder Drehbewegungen, die in der Sensorbasisfläche liegen, zu Bewegungen der Messstellen relativ zueinander führen.

Insbesondere ist vorzugsweise vorgesehen, dass die Montagebereiche des Tragstrukturabschnitts aufgrund der elastischen Deformationen Bewegungen ausführen, die in einer zur Sensorbasisfläche parallelen Fläche erfolgen und somit vorteilhaft durch den Transformationsbereich in Bewegungen der Messstellen relativ zueinander umgesetzt werden können.

Um die Sensorbasis als zusammenhängendes Teil ausführen zu können, ist vorzugsweise vorgesehen, dass die Fixierbereiche der Sensorbasis durch mindestens ein elastisch bewegbares Element miteinander verbunden sind, wobei das elastisch bewegbare Element keine Einflüsse auf die Transformationseigenschaften des Transformationsbereichs hat, sondern lediglich dazu dient, die Fixierbereiche und auch den Transformationsbereich zu einem einstückigen Teil zusammenzuhalten.

Vorzugsweise ist dabei vorgesehen, dass das elastisch bewegbare Element ein Teil des Transformationsbereichs ist.

Hinsichtlich der Ausbildung des Transformationsbereichs wurden im Zusammenhang mit den bisherigen Erläuterungen zu den einzelnen Ausführungsbeispielen keine näheren Angaben gemacht.

So sieht eine vorteilhafte Lösung vor, dass der Transformationsbereich mindestens einen sich von einem der Fixierbereiche in Richtung des anderen der Fixierbereiche erstreckenden Vorsprung aufweist, der eine der Messstellen bildet.

Diese Lösung hat den Vorteil, dass sich durch die Anordnung der Messstelle an dem Vorsprung der Weg, den die Messstelle bei einer Drehbewegung des Fixierbereichs durchläuft, vergrößern lässt, so dass die Messstelle bei einer Anordnung derselben an dem Vorsprung einen größeren Weg durchläuft als in dem Fall, in dem die Messstelle unmittelbar an dem Fixierbereich vorgesehen ist.

Besonders vorteilhaft ist daher eine Lösung, bei welcher der Transformationsbereich mindestens einen sich von jedem der Fixierbereiche in Richtung des jeweils anderen der Fixierbereiche erstreckenden Vorsprung aufweist und dass jeder der Vorsprünge mindestens eine der Messstellen trägt.

Damit lassen sich bei Drehbewegungen der Fixierbereiche die Wege, welche die Messstellen durchlaufen, vergrößern und somit die mit der Sensoreinheit zu messenden Effekte eindeutiger erfassen.

Beispielsweise sind dabei die Vorsprünge so angeordnet, dass sie einander zugewandte Abschnitte aufweisen, welchen die Messstellen zugeordnet sind.

Besonders günstig ist es, wenn die Vorsprünge im Abstand voneinander verlaufende Abschnitte aufweisen und wenn diesen Abschnitten die Messstellen zugeordnet sind.

Eine besonders große Verstärkung der Effekte bei einer Drehbewegung eines Fixierbereichs lässt sich dann erreichen, wenn einer der Vorsprünge als Arm ausgebildet ist und somit eine im Vergleich zum Abstand der Fixierbereiche voneinander große Ausdehnung aufweist.

Insbesondere ist dabei vorgesehen, dass die Messstelle in einem maximal von dem den Arm tragenden Fixierbereich beabstandeten Armbereich angeordnet ist.

Vorzugsweise ist dabei vorgesehen, dass ein Abstand zwischen der Messstelle und dem Fixierbereich mindestens einem Drittel eines Abstandes der Fixierbereiche voneinander entspricht, so dass der Arm eine sehr große Länge aufweist.

Noch besser ist es, wenn der Abstand zwischen der Messstelle und dem Fixierbereich mindestens der Hälfte des Abstandes der Fixierbereiche voneinander entspricht.

Bei der Ausbildung eines der Vorsprünge als Arm ist es besonders vorteilhaft, wenn die Vorsprünge unterschiedliche Längen aufweisen, das heißt wenn die an einem Fixierbereich vorgesehenen Vorsprünge eine geringere Länge aufweisen als die am anderen Fixierbereich vorgesehenen Vorsprünge.

Beispielsweise weist der als Arm ausgebildete Vorsprung eine Ausdehnung in Richtung des gegenüberliegenden Fixierbereichs auf, die mindestens dem Doppelten, noch besser mindestens dem Dreifachen des Vorsprungs des gegenüberliegenden Fixierbereichs entspricht.

Im Extremfall erstreckt sich in diesem Fall der Arm von dem einen Fixierbereich zum anderen Fixierbereiche und an dem anderen ist unmittelbar die mindestens eine Messstelle vorgesehen.

Hinsichtlich der Ausbildung der Sensoreinheit wurden bislang keine näheren Angaben gemacht.

So könnte theoretisch die Sensoreinheit eine Verbiegung eines Sensorelements oder eine Verdrehung eines Sensorelements erfassen.

Die erfindungsgemäße Lösung sieht vor, dass die Sensoreinheit eine Abstandsmesseinheit umfasst.

Die Abstandsmesseinheit könnte dabei mit mechanischer Berührung, das heißt beispielsweise mit Druck arbeiten.

Besonders vorteilhaft ist es jedoch, wenn die Abstandsmesseinheit den Abstand der Messstellen mechanisch berührungslos erfasst.

Vorzugsweise ist in diesem Fall vorgesehen dass die Abstandsmesseinheit an jeder der Messstellen eines von zwei zusammenwirkenden Messelementen aufweist.

Die Messelemente könnten dabei auf der Basis einer optischen Messung oder auch anderer physikalischer abstandsrelevanter Größen arbeiten.

Besonders vorteilhaft ist es, wenn die Abstandsmesseinheit eine Abstandsmessung aufgrund einer Magnetfelderfassung durchführt.

Aus diesem Grund sieht eine vorteilhafte Lösung vor, dass die Abstandsmesseinheit ein magnetfelderzeugendes Messelement und ein magnetfeldmessendes Messelement umfasst.

Das magnetfelderzeugende Messelement kann beispielsweise so ausgebildet sein, dass es einen Permanentmagnet aufweist oder aber so ausgebildet sein, dass es eine elektrisch betreibbare Spule umfasst, die das Magnetfeld erzeugt.

In diesem Fall besteht vorteilhafterweise die Möglichkeit, die elektrisch betreibbare Spule so zu betreiben, dass das Magnetfeld für den jeweiligen Messvorgang optimal ist oder gegebenenfalls variiert oder sogar oszilliert.

Hinsichtlich des magnetfeldmessenden Messelements wurden ebenfalls keine weiteren Angaben gemacht. So sind alle magnetfeldmessenden Messelemente einsetzbar.

Eine besonders zweckmäßige Lösung sieht vor, dass das magnetfeldmessende Messelement einen Hall-Sensor umfasst.

Hinsichtlich der Ausbildung der Sensorbasis sind die unterschiedlichsten Lösungen denkbar.

Die Sensorbasis kann theoretisch aus einem rein die mechanischen Bewegungen übertragenden Material, beispielsweise Metall oder Kunststoff sein, ohne dass die Sensorbasis weitere Funktionen übernimmt.

Eine hinsichtlich der Fertigung der erfindungsgemäßen Lösung vorteilhafte Ausbildung der Sensoreinheit ist vorzugsweise so ausgebildet, dass die Sensorbasis eine Leiterplatte zur Aufnahme einer Sensorschaltung umfasst.

Prinzipiell könnte die Leiterplatte auch die mechanischen Funktionen übernehmen, da eine Leiterplatte vielfach keine ausreichende Stabilität aufweist, ist die Sensorbasis zweckmäßigerweise als Verbundbauteil aus einer Trägerplatte und einer Leiterplatte ausgebildet, wobei die Trägerplatte für die mechanischen Eigenschaften verantwortlich ist und die Leiterplatte zur Aufnahme der Sensorschaltung und zur Verfügungstellung der elektrischen Leiterbahnen dient.

Besonders zweckmäßig ist es dabei, wenn sich die Leiterplatte bis zu den Messstellen erstreckt und wenn auf der Leiterplatte die Elemente der Abstandsmesseinheit an den Messstellen angeordnet sind.

Um aus den von der Sensoreinheit erfassten Bewegungen der Messstellen Größen für die auf die Tragstruktur wirkenden Kräfte zu ermitteln, ist vorzugsweise eine Auswerteeinheit zur Ermittlung der Kraft aus den von der Sensoreinheit erfassten Bewegungen der Messstellen vorgesehen.

Beispielsweise arbeitet die Auswerteeinheit so, dass sie zur Ermittlung der Kraft kraftfreie Sensorsignale mit kraftbehafteten Sensorsignalen vergleicht.

Beispielsweise besteht die Möglichkeit, dass die Auswerteeinheit aus der Abweichung der kraftbehafteten Sensorsignale von einem kraftfreien Sensorsignal ein Maß für die Kraft ermittelt.

Insbesondere in dem Fall, in dem die Kraft einer Stützlast erfasst werden soll, ist vorzugsweise vorgesehen, dass die Auswerteeinheit die Abweichung eines stützlastbedingten Sensorsignals von einem stützlastfreien Sensorsignal ermittelt.

Zur Ermittlung des kraftfreien Sensorsignals sind unterschiedliche Möglichkeiten denkbar.

Beispielsweise ist es denkbar, dass die Auswerteeinheit das kraftfreie Sensorsignal im Rahmen einer Referenzwertmessung ermittelt, die beispielsweise vor Beginn eines Anhängens einer Last, entweder automatisch oder durch einen Nutzer initiiert, vorgenommen werden kann.

Um ausschließlich die auf die Tragstruktur wirkende statische Kraft zu ermitteln, ist vorzugsweise vorgesehen, dass die Auswertereinheit das lastbedingte Sensorsignal, das heißt das durch eine statische Kraft auf die Tragstruktur wirkende Sensorsignal, bei nicht fahrendem Fahrzeug ermittelt.

Um ferner zu ermitteln, inwieweit die ermittelte Kraft eine zulässige Kraft darstellt, die die Fahrzeugeigenschaften nicht beeinträchtigt, oder eine Kraft darstellt, die signifikant die Fahrzeugeigenschaften oder Fahreigenschaften beeinträchtigt, ist vorzugsweise vorgesehen, dass die Auswerteeinheit die Zulässigkeit der Kraft durch Vergleich mit mindestens einem in der Auswerteeinheit vorgegebenen, beispielsweise gespeicherten Referenzwert ermittelt.

Um die Möglichkeit zu eröffnen, dass ein Nutzer die ermittelte Kraft auf die Tragstruktur erkennen kann, ist vorzugsweise vorgesehen, dass die Auswerteeinheit mit einer Anzeigeeinheit gekoppelt ist, welche die Kraft anzeigt.

Beispielsweise ist eine derartige Anzeigeeinheit entweder am Kraftfahrzeug oder unmittelbar an der Tragstruktur, beispielsweise an einem Kugelhals einer Anhängekupplung, vorgesehen.

Alternativ oder ergänzend zur Messung einer Kraft, insbesondere einer statischen Kraft, auf die Tragstruktur besteht auch die Möglichkeit, mit der erfindungsgemäßen Sensoreinheit Beschleunigungen zu erfassen, die auf die Tragstruktur wirken, nämlich durch Ermittlung der zeitlichen Variation der Kraft, beispielsweise während des Fahrbetriebs.

In dem Moment, in dem die Kraft auf die Tragstruktur sich gegenüber der Kraft bei stehendem Fahrzeug mit statischer Last ändert, liegt eine Beschleunigung vor, die auf die Tragstruktur wirkt.

Somit lassen sich durch bloße Erfassung der Änderungen der Kräfte während des Fahrbetriebs Beschleunigungen auf die Tragstruktur erfassen, wobei die Größe der Beschleunigungen mit der Änderung der Kräfte auf die Tragstruktur unmittelbar zusammenhängt.

So lassen sich bei der erfindungsgemäßen Trägereinheit alle auf die Tragstruktur wirkenden Kräfte erfassen, die zu einer elastischen Deformation des durch die Sensoreinheit erfassten Tragstrukturabschnitts in der jeweiligen Ebene führen, in der die Montagebereiche, sich bedingt durch die wirkenden Kräfte, relativ zueinander bewegen, wobei diese Ebene in der parallel zu der jeweiligen Sensorbasisfläche der entsprechenden Sensorbasis verläuft.

Sollten Kräfte erfasst werden, die in unterschiedlichen Ebenen wirken, so besteht die Möglichkeit, mehrere der erfindungsgemäßen Sensoreinheiten mit unterschiedlich ausgerichteten Sensorbasisflächen an der Tragstruktur vorzusehen, die dann auch die elastischen Deformationen von Montagebereichen in entsprechend den unterschiedlichen Sensorbasisflächen ausgerichteten Ebenen erfassen.

Bei Verwendung einer Sensoreinheit zur Ermittlung der Kraft einer Stützlast besteht bereits die Möglichkeit, nicht nur bei stehendem Fahrzeug die Kraft der Stützlast zu ermitteln, sondern auch bei fahrendem Fahrzeug zusätzliche vertikal auftretende Kräfte, da diese in gleicher Richtung wirken, wie die Kraft der Stützlast.

Im Zusammenhang mit der bisherigen Beschreibung der einzelnen Ausführungsbeispiele wurde nicht darauf eingegangen, welchen Abstand die Fixierbereiche der Sensorbasis relativ zueinander aufweisen.

Um möglichst einfach messbare Bewegungen der Messstellen zu erhalten, ist vorzugsweise vorgesehen, dass die Fixierbereiche der Sensorbasis in einem Abstand angeordnet sind, welcher größer ist als 1 cm.

Noch besser ist es, wenn die Fixierbereiche der Sensorbasis einen Abstand voneinander aufweisen, der mehrere Zentimeter beträgt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise aufgebrochene Seitenansicht einer Karosserie eines Kraftfahrzeugs mit einer erfindungsgemäßen Trägereinheit;
- Fig. 2: eine perspektivische Darstellung eines ersten Ausführungsbeispiels einer erfindungsgemäßen Trägereinheit;
- Fig. 3: eine vergrößerte perspektivische Darstellung eines Trägerelements des ersten Ausführungsbeispiels der erfindungsgemäßen Trägereinheit;
- Fig. 4: eine schematische Darstellung einer Auswerteeinheit im Zusammenhang mit einer erfindungsgemäßen Sensoreinheit und einer Anzeigeeinheit;
- Fig. 5: eine schematische Draufsicht auf ein erstes Ausführungsbeispiel einer erfindungsgemäßen Sensoreinheit wie sie an dem ersten Ausführungsbeispiel der erfindungsgemäßen Trägereinheit eingesetzt ist;
- Fig. 6: eine perspektivische Darstellung ähnlich Fig. 2 eines zweiten Ausführungsbeispiels einer erfindungsgemäßen Trägereinheit;
- Fig. 7: eine vergrößerte Darstellung des Trägerelements ähnlich Fig. 3 eines dritten Ausführungsbeispiels einer erfindungsgemäßen Trägereinheit;
- Fig. 8: eine perspektivische Darstellung ähnlich Fig. 2 eines vierten Ausführungsbeispiels einer erfindungsgemäßen Trägereinheit;
- Fig. 9: eine vergrößerte Darstellung eines Trägerelements des vierten Ausführungsbeispiels der erfindungsgemäßen Trägereinheit;
- Fig. 10: eine perspektivische Darstellung ähnlich Fig. 2 eines fünften Ausführungsbeispiels einer erfindungsgemäßen Trägereinheit;
- Fig. 11: eine perspektivische Darstellung eines Trägerelements des fünften Ausführungsbeispiels der erfindungsgemäßen Trägereinheit;
- Fig. 12: eine perspektivische Darstellung eines sechsten Ausführungsbeispiels einer erfindungsgemäßen Trägereinheit;
- Fig. 13: eine Darstellung ähnlich Fig. 5 eines zweiten Ausführungsbeispiels einer erfindungsgemäßen Sensoreinheit wie sie bei dem ersten Ausführungsbeispiel der erfindungsgemäßen Trägereinheit zum Einsatz kommt;
- Fig. 14: eine Darstellung ähnlich Fig. 5 eines dritten Ausführungsbeispiels einer erfindungsgemäßen Trägereinheit;
- Fig. 15: einen Schnitt längs Linie 15-15 in Fig. 14;
- Fig. 16: eine Darstellung ähnlich Fig. 5 eines vierten Ausführungsbeispiels einer erfindungsgemäßen Sensoreinheit und
- Fig. 17: einen Schnitt längs Linie 17-17 in Fig. 16.

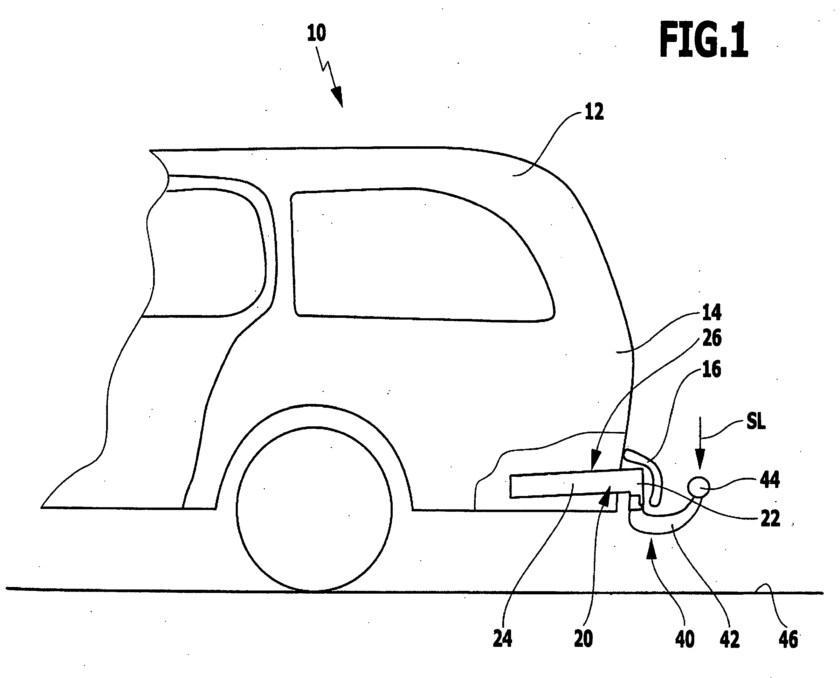

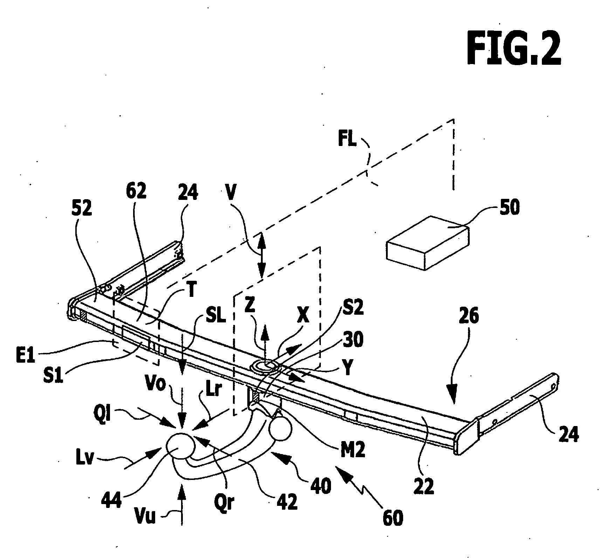

Ein in Fig. 1 als Ganzes mit 10 bezeichnetes Kraftfahrzeug umfasst eine Fahrzeugkarosserie 12, an welcher in einem Heckbereich 14 eine erfindungsgemäße Trägereinheit 20 montiert ist, welche einen von einer Stoßfängereinheit 16 abgedeckten Querträger 22 sowie sich in Längsrichtung der Karosserie entlang von Karosseriewandabschnitten erstreckende und an diesen fixierbare Seitenträger 24 aufweist, die zusammen mit dem Querträger einen Karosserieverbindungsträger 26 (Fig. 2) bilden, welcher zum Teil durch die Fahrzeugkarosserie 12 und zum Teil durch die Stoßfängereinheit 16 abgedeckt ist.

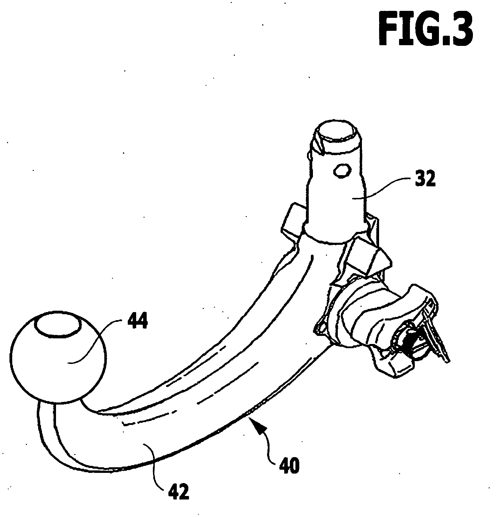

An dem Karosserieverbindungsträger 26 ist eine als Ganzes mit 30 bezeichnete Aufnahme für ein in Fig. 3 vergrößert dargestelltes Halteelement 32 eines als Ganzes mit 40 bezeichneten Trägerelements vorgesehen, welches in diesem Fall als Kugelhals 42 ausgebildet ist, der einerseits das Halteelement 32 trägt und andererseits mit einer Kupplungskugel 44 als Lasten aufnehmendem Element versehen ist.

Der Karosserieverbindungsträger 26 und das Trägerelement 40 bilden bei diesem Ausführungsbeispiel eine erfindungsgemäße Tragstruktur 60.

Im Falle des Kugelhalses 42 als Trägerelement 40 wirken auf die Kupplungskugel 44, welche zur Verbindung mit einem Fahrzeuganhänger oder zur Aufnahme eines Hecklastenträgers dient, zumindest die folgenden Kräfte.

Im statischen Fall, das heißt bei stehendem Fahrzeug, wirkt auf die Kupplungskugel 44 eine einer Stützlast entsprechende Kraft SL, welche vorzugsweise in vertikaler Richtung quer zu einer Fahrbahn 46 gerichtet ist und in Schwerkraftrichtung oder entgegengesetzt zur Schwerkraftrichtung auf die Kupplungskugel 44 einwirken kann.

Die der Stützlast entsprechende Kraft SL stellt dabei ein Maß dafür dar, wie stark ein Anhänger auf die Kupplungskugel 44 drückt oder wie schwer ein an der Kupplungskugel 44 angreifender Hecklastenträger des Kraftfahrzeugs ist.

Zusätzlich wirkt im Fahrbetrieb des Kraftfahrzeugs eine in einer Fahrzeuglängsmittelebene FL liegende vertikale Kraft Vo von oben und/oder eine in der Fahrzeuglängsmittelebene FL liegende vertikale Kraft Vu von unten, je nach dem, in welchem fahrdynamischen Zustand sich das Kraftfahrzeug 10 und ein an dieses angehängter Anhänger oder ein an diesem montierter Hecklastenträger befinden.

Gleichzeitig wirken im Fahrbetrieb auf die Kupplungskugel 44 eine im Wesentlichen horizontal auf diese einwirkende Querkraft QI von links und/oder eine dazu gegebenenfalls entgegengesetzte Querkraft Qr von rechts wobei diese Querkräfte QI und Qr vorzugsweise quer, insbesondere senkrecht auf der Fahrzeuglängsmittelebene FL stehen.

Ferner wirken im Fahrbetrieb auf die Kupplungskugel 44 noch eine horizontal ausgerichtete Längskraft Lv nach vorne und/oder eine horizontal ausgerichtete Längskraft Lr nach hinten, wobei die Längskräfte Lv und Lr in der Fahrzeuglängsmittelebene FL liegen, in gleicher Weise wie die vertikale Kraft von oben Vo und die vertikale Kraft von unten Vu.

Die erfindungsgemäße Aufgabe, nämlich die Fahrzustände des Kraftfahrzeugs 10 sicherer zu gestalten und gegebenenfalls unsichere Fahrzustände zu erkennen, wird bei der erfindungsgemäßen Trägereinheit dadurch gelöst, dass mindestens eine oder mehrere der Kräfte SL, QI, Qr, Vo, Vu, Lv und Lr durch eine von der erfindungsgemäßen Trägereinheit 20 umfasste Sensoreinheit S1 mit einer Auswerteeinheit 50 erfasst und, beispielsweise unter Zuhilfenahme von Schwellwerten, ausgewertet werden.

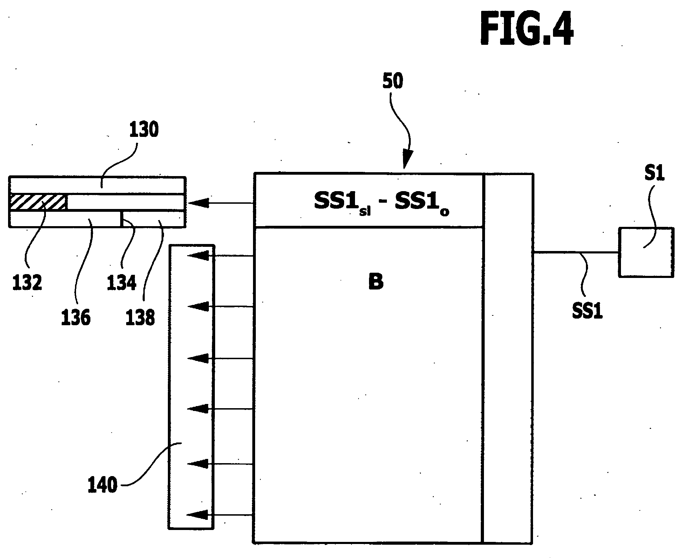

Die Auswerteeinheit 50 ermittelt dann ihrerseits im Zuge der Auswertung, ob Informationssignale für den Betreiber des Kraftfahrzeugs oder für eine Fahrzustandserfassung des Kraftfahrzeugs ausgegeben werden (Fig. 4).

Die Erfassung der vorstehend genannten Kräfte durch die Auswerteeinheit 50 erfolgt, wie beispielsweise in Fig. 2 dargestellt, durch die Sensoreinheit S1 die an einem elastisch deformierbaren Tragstrukturabschnitt T der Tragstruktur 60 angeordnet ist und die durch die vorstehend genannten Kräfte bewirkte elastische Deformation des Tragstrukturabschnitts T erfasst.

Beispielsweise ist bei dem in Fig. 2 dargestellten Ausführungsbeispiel die Sensoreinheit S1 am Querträger 22 angeordnet und erfasst eine elastische Deformation des den Tragstrukturabschnitt T des Querträger 22 bildenden Querträgerabschnitts 62 in einer parallel zu den Z/Y-Richtungen verlaufenden Ebene E1.

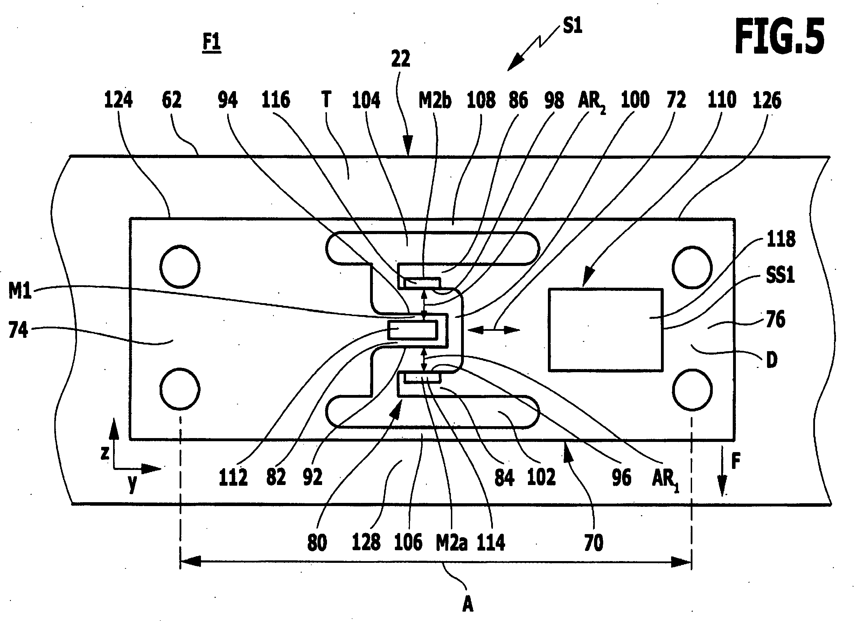

Ein in Fig. 5 dargestelltes erstes Ausführungsbeispiel einer erfindungsgemäßen Sensoreinheit S1, welche an dem Tragstrukturabschnitt T angeordnet ist und eine Deformation, das heißt beispielsweise Verbiegung, des Tragstrukturabschnitts T in der zu der Ebene E1 parallelen Zeichenebene der Fig. 5 zu detektieren in der Lage ist, umfasst eine als Ganzes mit 70, bezeichnete Sensorbasis, welche beispielsweise als sich parallel zur Ebene E1 in einer Sensorbasisfläche F1 erstreckendes plattenförmiges Teil aus Metall oder Kunststoff ausgebildet ist, welches sich in einer Längsrichtung 72 erstreckt und in der Längsrichtung 72 in einem Abstand A, der in der Größenordnung von mehreren Zentimetern liegt, voneinander angeordnete Fixierbereiche 74 und 76 aufweist, zwischen denen ein als Ganzer mit 80 bezeichneter Transformationsbereich der Sensorbasis 70 liegt. Der Transformationsbereich 80 wird dabei gebildet durch einen mit dem ersten Fixierbereich 74 fest verbundenen fingerartigen Vorsprung 82, beispielsweise in Form einer Zunge, der sich beispielsweise parallel zur Längsrichtung 72 oder in einem spitzen Winkel zur Längsrichtung 72 ausgehend von dem Fixierbereich 74 in Richtung des Fixierbereichs 76 erstreckt.

Ferner wird der Transformationsbereich 80 gebildet durch zwei fingerartige Vorsprünge 84 und 86 des Fixierbereichs 76, beispielsweise ebenfalls in Form von Zungen, die sich ausgehend von diesem in Richtung des ersten Fixierbereichs 74 erstrecken, und zwar entweder ungefähr parallel zur Längsrichtung 72 oder in einem spitzen Winkel zu dieser.

Vorzugsweise erstrecken sich dabei die fingerartigen Vorsprünge 84 und 86 parallel zueinander und noch besser auch parallel zu dem fingerartigen Vorsprung 82.

Erfindungsgemäß liegt beispielsweise der fingerartige Vorsprung 82 zwischen den fingerartigen Vorsprüngen 84 und 86 und erstreckt sich zwischen diesen berührungsfrei, so dass sich der fingerartige Vorsprung 82 relativ zu den fingerartigen Vorsprüngen 84 und 86 im Wesentlichen kräftefrei bewegen kann.

Dabei ist es günstig, wenn der fingerartige Vorsprung 82 im Wesentlichen ungefähr mittig zwischen den fingerartigen Vorsprüngen 84 und 86 angeordnet ist und einander gegenüberliegende Randbereiche 92 und 94 aufweist, zwischen denen eine erste Messstelle M1 liegt, die einem Randbereich 96 des fingerartigen Vorsprungs 84 und einem Randbereich 98 des fingerartigen Vorsprungs 86 zugewandt sind, an welche zweite Messstellen M2a und M2b angrenzen, wobei die Randbereiche 92 und 96 sowie 94 und 98 im Ausgangszustand der Sensorbasis 70 einander gegenüberliegend und in ungefähr gleichen Abständen AR₁ bzw. AR₂ zueinander verlaufen.

Vorzugsweise werden die fingerartigen Vorsprünge 82 sowie 84 und 86 dadurch gebildet, dass aus einer die Fixierbereich 74 und 76 bildenden Platte eine insgesamt Omega-förmige Ausnehmung 100 ausgeschnitten wird, die den fingerartigen Vorsprung 82 umschließt und somit auch den Freiraum zwischen dem fingerartigen Vorsprung 82 und den beiderseits desselben sich dadurch gebildeten fingerartigen Vorsprüngen 84 und 86 schafft.

Ferner werden die fingerartigen Vorsprünge 84 und 86 auf ihren dem fingerartigen Vorsprung 82 abgewandten Seiten durch Ausnehmungen 102 und 104 begrenzt, die zwischen den fingerartigen Vorsprüngen 84 und 86 sowie äußeren federelastischen Stegen 106 und 108 liegen, welche beispielsweise durch Außenränder des die Sensorbasis 70 bildenden plattenförmigen Teils ausgebildet sind, und die Fixierbereiche miteinander verbunden, so dass die Sensorbasis 70 vorzugsweise als ein zusammenhängendes Teil ausgebildet ist.

Die Sensorbasis 70 stellt ein mechanisches Teil dar, welches Abstandsmesselemente einer als Ganzes mit 110 bezeichneten Messeinheit trägt, wobei ein auf dem fingerartigen Vorsprung 82 zwischen den Randbereichen 92 und 94 an der ersten Messstelle M1 sitzendes erstes Messelement 112 beispielsweise ein magnetfelderzeugendes Element ist, welches entweder als Permanentmagnet oder als bestrombare Spule ausgebildet sein kann.

Außerdem sitzen nahe der Randbereiche 96 und 98 an der zweiten Messstelle M2a und M2b der fingerartigen Vorsprünge 84 und 86 zweite Messelemente 114 und 116 die beispielsweise als Magnetfeldsensoren, insbesondere als Hall-Detektoren, ausgebildet sind und das Magnetfeld des magnetfelderzeugenden ersten Messelements 112 erfassen.

Da das Magnetfeld, das von den zweiten Messelementen 114 und 116 erfasst wird mit dem Abstand von dem ersten Messelement 112 variiert, dienen somit die zweiten Messelemente 114 und 116 zur Erfassung des Abstandes von dem jeweils ersten Messelement 112, wobei diese Abstände in gleicher Weise wie die Abstände AR₁ und AR₂ der Randbereiche 92 und 96 bzw. 94 und 98 variieren.

Die Messelemente 112, 114 und 116 sind mit einer Sensorschaltung 118 elektrisch verbunden, so dass die Sensorschaltung 118 in der Lage ist, einen Abstand zwischen den Messstellen M1 sowie M2a bzw. M2b der fingerartigen Vorsprünge 82 und 84 sowie 82 und 86 zu erfassen und ein dem Abstand oder einer Variation des Abstands bezüglich einer Ausgangsstellung anzeigendes Sensorsignal SS1 zu erzeugen.

Bei dem dargestellten Ausführungsbeispiel dient somit die Sensorbasis 70 nicht nur zur mechanischen Übertragung der Bewegung der Fixierbereiche 74 und 76 auf die Messstellen M1, M2a und M2b und den von diesen getragenen Messelementen 112 sowie 114 und 116 sowie auch als Träger der Sensorschaltung 118.

Bei dem ersten Ausführungsbeispiel der Sensoreinheit S1 sind nun die Fixierbereiche 74 und 76 fest mit diese tragenden Montagebereichen 124 und 126 des Tragstrukturabschnitts T, das heißt in diesem Fall des Querträgerabschnitts 62, verbunden, wobei ein zwischen den Montagebereichen 124 und 126 liegender Zwischenbereich 128 des Tragstrukturabschnitts T, in diesem Fall des Querträgerabschnitts 62, keine Verbindung mit der Sensorbasis 70 hat und sich somit dessen Bewegungen nicht auf die Sensorbasis 70, insbesondere nicht auf den Transformationsbereich 80 auswirken, so dass sich der Transformationsbereich 80 lediglich entsprechend den Bewegungen der Fixierbereiche 74 und 76 bewegt.

Eine auf die Kupplungskugel 44 einwirkende Kraft SL führt nun dazu, dass die Kraft SL der Stützlast zu einer Kraft auf den Querträger 22 im Bereich der Aufnahme 30 wirkt, die sich auf den ganzen Querträger 22 überträgt und auch zu einer Verbiegung des Querträgerabschnitts 62, umfassend die Montagebereiche 124 und 126 sowie den zwischen diesen liegenden Zwischenbereich 128, so dass eine Kraft F auf den Montagebereich 126 einwirkt, wobei zur Beurteilung der elastischen Deformation des Querträgerabschnitts 62 der Montagebereich 124 als Einspannstelle betrachtet wird, ausgehend von welcher sich der Querträgerabschnitt 62 unter Einwirkung der Kraft F in Richtung der Kraft F verbiegt, so dass der Montagebereich 126 durch die Verbiegung geringfügig in Richtung der Kraft F wandert und dabei noch eine Verdrehung um eine Drehachse D ausführt.

Sowohl das Wandern des Montageabschnitts 126 relativ zum Montageabschnitt 124 als auch die Verdrehung des Montageabschnitts 126 erfolgen dabei um Bruchteile von Millimetern, wobei dies auch davon abhängt, wie weit die Fixierbereiche 74 und 76 und somit auch die Montagebereiche 124 und 126 voneinander entfernt sind.

Da die Fixierbereiche 74 und 76 den Bewegungen der Montagebereiche 124 und 126 relativ zueinander folgen und der Zwischenbereich 128 keinen Einfluss auf die Sensorbasis 70 und somit auch keinen direkten Einfluss auf die Bewegungen des Transformationsbereichs 80 der Sensorbasis 70 hat, führt die Bewegung des Fixierbereichs 76 relativ zum Bereich 74 zu einer Bewegung der fingerartigen Vorsprünge 82 und 84 sowie 82 und 86 des Transformationsbereiches 80 relativ zueinander, wobei sich die Abstände AR₁ und AR₂ relativ zueinander verändern, das heißt, dass der eine der Abstände AR₁ oder AR₂ größer wird und der andere der Abstände AR₁ oder AR₂ kleiner wird.

Diese, durch den Transformationsbereich 80 der Sensorbasis 70, erzeugte Änderung der Abstände AR₁ und AR₂ wird durch die Messelemente 112 sowie 114 und 116 erfasst und die Sensorschaltung 118 Messeinheit 110 erzeugt das Sensorsignal SS1, das ein Maß für die elastische Verbiegung des Querträgerabschnitts 62 angibt.

Mit der Auswerteeinheit 50 besteht somit die Möglichkeit, ohne Belastung der Kupplungskugel 44 einen Referenzwert, beispielsweise das Sensorsignal SS1₀, abzuspeichern und dann die danach gemessenen Sensorsignale SS1_{sL}, die bei einer oder mehreren Stützlasten auftreten, in Relation zum Referenzwert SS1₀ zu setzen und daraus ein Maß für die von der Stützlast ausgeübte Kraft SL abzuleiten.

Beispielsweise ist der Auswerteeinheit 50 eine Anzeigeeinheit 130 zugeordnet (Fig. 4), welche in Form eines Balkens 132 den Wert für die der Stützlast entsprechende Kraft SL anzeigt, wobei der Balken 132 parallel zu einem Skalenfeld 134 verläuft, das für einen Beobachter entweder zwischen einem tolerablen Bereich 136 oder einen nicht tolerablen Bereich 138 unterscheidet und somit dem Nutzer der erfindungsgemäßen Trägereinheit 20 die Möglichkeit verschafft, festzustellen, ob die durch die Stützlast bedingte Kraft SL auf die Trägereinheit 20 im tolerablen oder nicht tolerablen Bereich liegt.

Es gibt aber auch die Möglichkeit, das Skalenfeld 134 noch mit unterschiedlichen abgestuften Bereichen der Tolerabilität zu markieren und somit dem Nutzer die Möglichkeit zu geben, zwischen mehreren Bereichen der Tolerabilität zu unterscheiden.

Es besteht sogar die Möglichkeit, das Skalenfeld 134 so auszubilden, dass es Werte der durch die Stützlast bedingten Kraft SL anzeigt.

Vorzugsweise ist die Anzeigeeinheit 130 entweder an dem Kraftfahrzeug oder an der Trägereinheit 20, beispielsweise im Fall des Kugelhalses 42, unmittelbar am Kugelhals 42, vorgesehen.

Mit der erfindungsgemäßen Sensoreinheit S1 besteht aber auch die Möglichkeit, durch Analyse der zeitlichen Variation der Sensorsignale SS1_{SL} dynamische Belastungen im Fahrbetrieb zu erfassen und somit beispielsweise Beschleunigungen, die auf die erfindungsgemäße Trägereinheit 20 einwirken, insoweit, als sie sich auf Bewegungen des Querträgerabschnitts 62 in der Ebene Elauswirken, und diese Beschleunigungen an eine Einheit 140 zur Erfassung der dynamischen Belastung der Trägereinheit 20 zu übermitteln.

Beispielsweise ist es denkbar, das Sensorsignal SS1 bei stehendem Fahrzeug als die durch die Stützlast bedingte Kraft zu interpretieren und während einem fahrenden Fahrzeug ausgehend von der bei stehendem Fahrzeug ermittelten Kraft SL der Stützlast die zusätzlichen Kräfte V, Q und L, die noch zusätzlich zeitlich variierend auftreten, und je nach Zusammenwirken zu einer Deformation des Querträgerabschnitts 62 mit einer Bewegung in der Ebene E1 führen können, als dynamische Belastung auszuwerten.

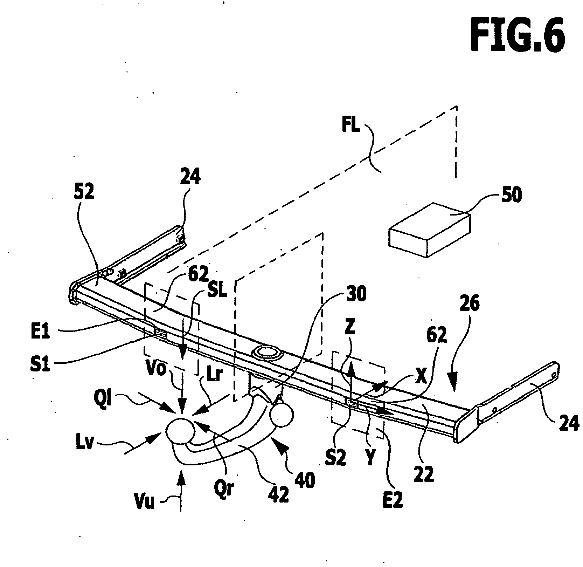

Die Genauigkeit der Messeinheit lässt sich noch dadurch verbessern, wenn die, wie in Fig. 6 bei einem zweiten Ausführungsbeispiel der erfindungsgemäßen Trägereinheit 20 dargestellt, an zwei Querträgerabschnitten 62 Sensoreinheiten S1 und S2 vorgesehen sind, die beide so ausgebildet sind, wie im Zusammenhang mit der Sensoreinheit S1 beschrieben, jedoch an verschiedenen Stellen des Querträgers 22 dessen Deformationen erfassen.

Bei dem dargestellten zweiten Ausführungsbeispiel der erfindungsgemäßen Trägereinheit 20 sind die Sensoreinheiten S1 und S2 so angeordnet, dass sie in parallel zueinander verlaufenden Ebenen E1 und E2 liegen und somit Deformationen erfassen, die durch im Wesentlichen dieselben Kräfte auf die Kupplungskugel bestimmt sind.

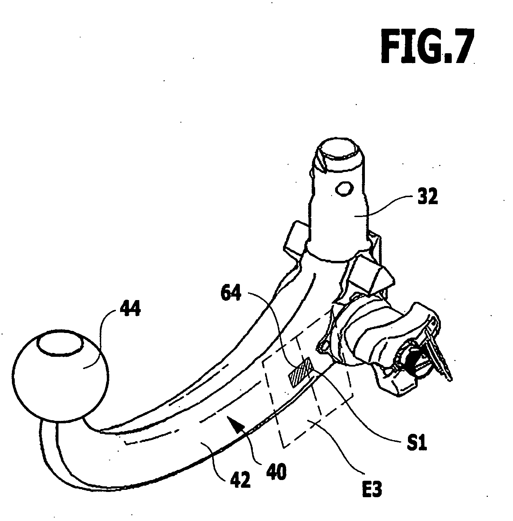

Alternativ oder ergänzend zum ersten und zweiten Ausführungsbeispiel ist bei einem dritten Ausführungsbeispiel der erfindungsgemäßen Trägereinheit 20, von welcher in Fig. 7 lediglich das Tragelement 40 dargestellt ist, vorgesehen, dass die Sensoreinheit S1 unmittelbar am Kugelhals 42 angeordnet ist, wobei die Sensoreinheit S1 beispielsweise nahe dem Halteelement 32 oder auch nahe der Kupplungskugel 44 angeordnet sein kann, um elastische Deformationen eines den Tragstrukturabschnitt darstellenden Kugelhalsabschnitt am Kugelhals 42 zu erfassen.

Dabei verläuft bei diesem Ausführungsbeispiel die Ebene E3, in welcher die Sensoreinheit S1 angeordnet ist, parallel zur X- und Z-Richtung, wobei durch die Sensoreinheit S1 ebenfalls Deformationen des Kugelhalses 42 erfasst werden, die durch die Kraft SL der Stützlast oder die Kräfte V oder teilweise noch durch die Kräfte L hervorgerufen werden können.

Die Auswertung der Sensorsignale SS1 erfolgt dabei in gleicher Weise wie im Zusammenhang mit den voranstehenden Ausführungsbeispielen beschrieben.

Im Übrigen sind die im Zusammenhang mit dem dritten Ausführungsbeispiel nicht ausdrücklich erwähnten Teile in gleicher Weise ausgebildet wie die entsprechenden Teile des ersten Ausführungsbeispiels, so dass hinsichtlich des ersten Ausführungsbeispiels voll inhaltlich auf die Ausführungen zu diesem Bezug genommen werden kann.

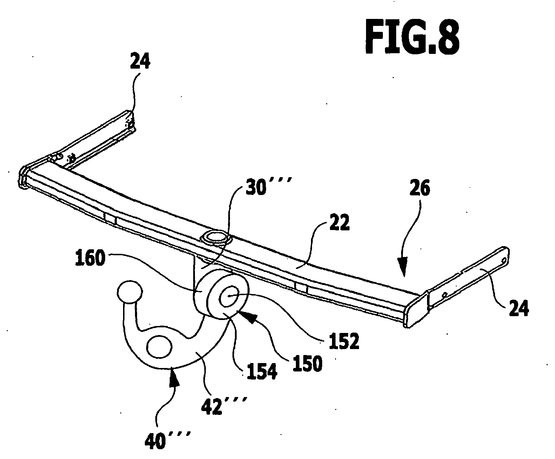

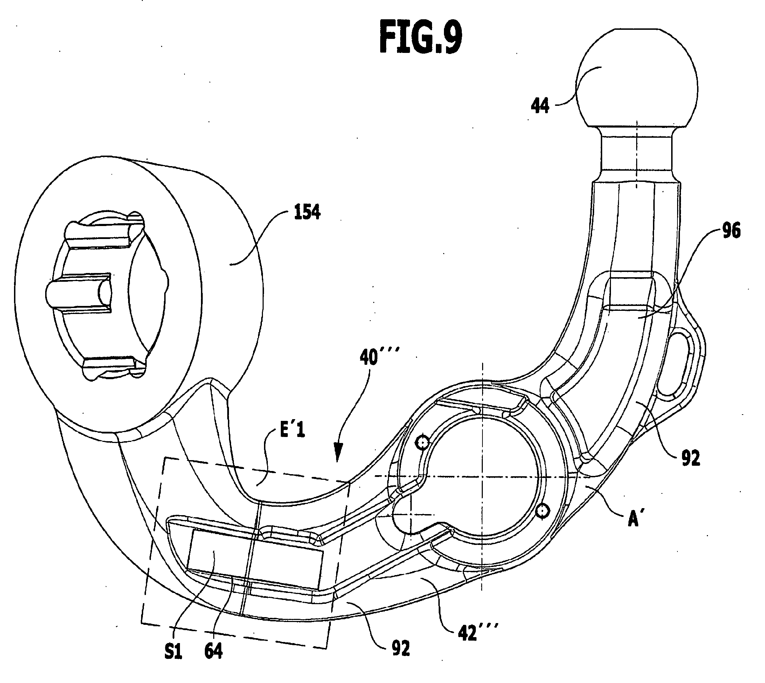

Bei einem vierten Ausführungsbeispiel, dargestellt in Fig. 8 und 9 ist der Karosserieverbindungsträger 26 bis auf die Aufnahme 30"' in gleicher Weise ausgebildet wie beim ersten, zweiten und dritten Ausführungsbeispiel und auch in gleicher Weise an dem Heckbereich 14 der Fahrzeugkarosserie des Kraftfahrzeugs 10 fixiert.

Im Gegensatz zum ersten Ausführungsbeispiel umfasst die Aufnahme 30"' ein Schwenklager 150 für das Trägerelement 40"', wobei das Schwenklager 150 einen fahrzeugfesten Lagerkörper 152 aufweist, relativ zu welchem ein schwenkbarer Lagerkörper 154 beispielsweise um eine einzige Schwenkachse schwenkbar ausgebildet sein kann, wie beispielsweise in den Patentanmeldungen EP 0 799 732 A und EP 1 142 732 A beschrieben, oder auch mehrachsig, im Extremfall dreiachsig, schwenkbar sein kann.

Das Schwenklager 150 ist ferner mit einer im Einzelnen nicht dargestellten, vorzugsweise in das Schwenklager integrierten Verriegelungsvorrichtung 160 in mindestens einer Schwenkstellung verriegelbar, um beispielsweise in der in Fig. 8 dargestellten Arbeitsstellung das Trägerelement 40"' relativ zum Karosserieverbindungsträger 26 in einer definierten Stellung starr zu fixieren.

Bei diesem vierten Ausführungsbeispiel können beispielsweise Sensoreinheiten S1 und S2, wie im Zusammenhang mit dem ersten oder zweiten Ausführungsbeispiel beschrieben, am Querträger 22 angeordnet sein.

Ergänzend oder alternativ dazu ist bei dem vierten Ausführungsbeispiel vorgesehen, dass die Sensoreinheit S1, wie in Fig. 9 dargestellt, am Trägerelement 40"' angeordnet ist und zwar in ähnlicher Weise wie im Zusammenhang mit dem dritten Ausführungsbeispiel beschrieben.

Auch bei dem vierten Ausführungsbeispiel erfolgt die Erzeugung und Auswertung des Sensorsignals SS1 der Sensoreinheit S1 in gleicher Weise wie im Zusammenhang mit dem dritten Ausführungsbeispiel beschrieben.

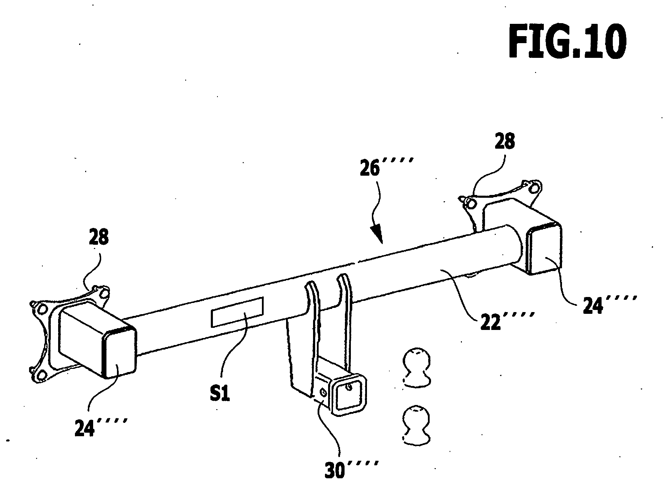

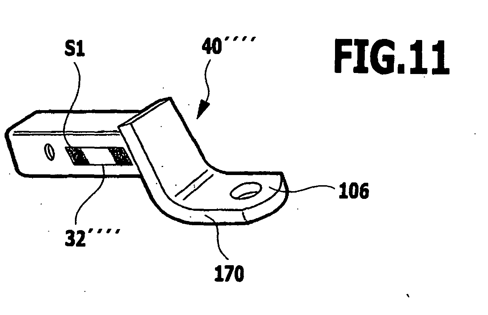

Bei einem fünften Ausführungsbeispiel einer erfindungsgemäßen Trägereinheit 20, dargestellt in Fig. 10 und Fig. 11, umfasst der Karosserieverbindungsträger 26"" den Querträger 22"", dessen elastische Deformation durch eine Sensoreinheit S1, in gleicher Weise wie im Zusammenhang mit dem ersten Ausführungsbeispiel beschrieben, erfasst werden kann.

Im Gegensatz zu dem ersten Ausführungsbeispiel ist allerdings beim fünften Ausführungsbeispiel die Aufnahme 30"" als Aufnahmehülse mit einer Vierkantaufnahme ausgebildet, in welche ein in Fig. 11 dargestelltes Halteelement 32"", beispielsweise ausgebildet als Vierkantrohr, einsteckbar und fixierbar ist, wobei das Halteelement 32"" Teil eines als Ganzes mit 40"" bezeichneten Trägerelements mit einem lastenaufnehmenden Element 170 ist, an welchem entweder eine Kupplungskugel oder als anderes ein Lastaufnahmeelement einer Lastentragvorrichtung montierbar ist.

Die auf das lastenaufnehmende Element 170 wirkende Kraft SL der Stützlast führt in der bereits beschriebenen Weise zu Deformationen des Querträgers 22"", die mit der Sensoreinheit S1 erfassbar sind.

Es ist aber auch möglich, die Sensoreinheit S1 beispielsweise an dem Halteelement 32"" vorzusehen und dessen Deformationen analog zu den elastischen Deformationen des Trägerelements 40 beim dritten Ausführungsbeispiel zu erfassen, wie in Fig. 11 dargestellt.

Im Übrigen funktioniert das fünfte Ausführungsbeispiel, insbesondere hinsichtlich der Erfassung der elastischen Deformation durch die Sensoreinheit S1 in gleicher Weise wie die voranstehenden Ausführungsbeispiele, so dass diesbezüglich vollinhaltlich auf die voranstehenden Ausführungsbeispiele verwiesen werden kann.

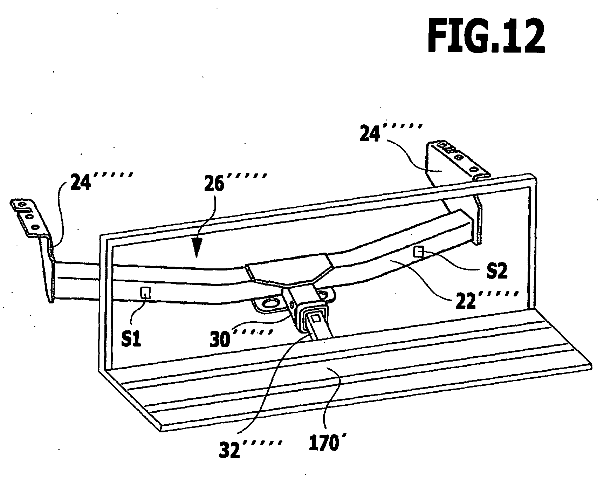

Bei einem sechsten Ausführungsbeispiel einer erfindungsgemäßen Trägereinheit 20, dargestellt in Fig. 12, ist die Sensoreinheit S1 oder gegebenenfalls noch eine Sensoreinheit S2, in gleicher Weise wie beim ersten oder zweiten Ausführungsbeispiel dargestellt, an dem Karosserieverbindungsträger 26""' angeordnet, während das lastaufnehmende Element 170' beispielsweise ein Fahrradträger ist, der mit dem Halteelement 32""' in die Aufnahme 30""' einsteckbar ist.

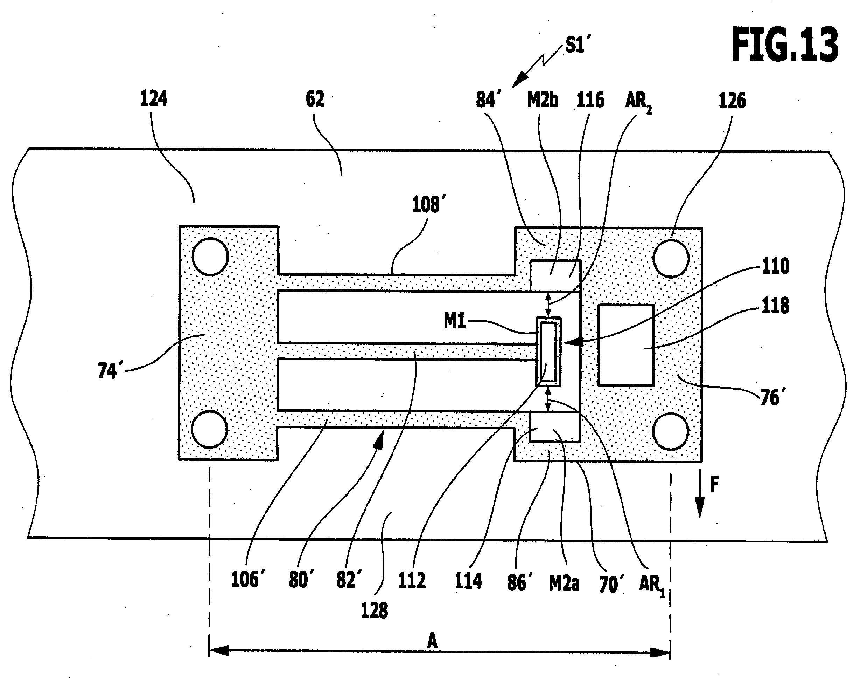

Bei einem zweiten Ausführungsbeispiel einer erfindungsgemäßen Sensoreinheit, S1' dargestellt in Fig. 13, sind dieselben Teile mit denselben Bezugszeichen versehen, so dass auch hinsichtlich der Beschreibung vollinhaltlich auf die Ausführungen zum ersten Ausführungsbeispiel Bezug genommen wird. Insbesondere erfolgt die Beschreibung für den Fall der Anordnung des zweiten Ausführungsbeispiels der Sensoreinheit S1' in gleicher Weise wie die Anordnung der Sensoreinheit S1 bei dem ersten Ausführungsbeispiel der erfindungsgemäßen Trägereinheit.

Im Gegensatz zum ersten Ausführungsbeispiel ist die Sensorbasis 70' insoweit verändert, als die fingerartigen Vorsprünge 84' und 86' in geringem Abstand von dem Fixierbereich 76' angeordnet sind, während der fingerartige Vorsprung 82' eine Länge aufweist, die ein mehrfaches der Länge der fingerartigen Vorsprünge 84' und 86' beträgt, vorzugsweise mindestens das Doppelte oder mindestens das Dreifache. Insbesondere ist der Arm 82' länger als ein Drittel des Abstandes A der Fixierbereiche 74' und 76'.

Ferner verlaufen die federelastischen Stege 106' und 108' im Anschluss an die fingerartigen Vorsprünge 84' und 86' ungefähr parallel zum Arm 82'. Durch diese geänderte Ausführung des Transformationsbereichs 80 erfolgt eine allein aufgrund der mechanischen Ausbildung eine verstärkte Verschiebung der an dem Arm 82' gehaltenen ersten Messstelle mit dem ersten Messelement 112 relativ zu den zweiten Messstellen M2a und M2b mit den Messelementen 114 und 116 und somit allein durch diese mechanische Ausbildung eine stärkere Änderung der Abstände AR₁ und AR₂ bei einer Deformation des Tragstrukturabschnitts 62 aufgrund einer Einwirkung der Kraft F.

Die Auswertung der durch die Abstandsmesseinheit 110 sich ergebenden Signale durch die Sensorschaltung 118 zur Erzeugung des Sensorsignals SS1 erfolgt in gleicher Weise wie im Zusammenhang mit dem ersten Ausführungsbeispiel der erfindungsgemäßen Sensoreinheit S1 beschrieben.

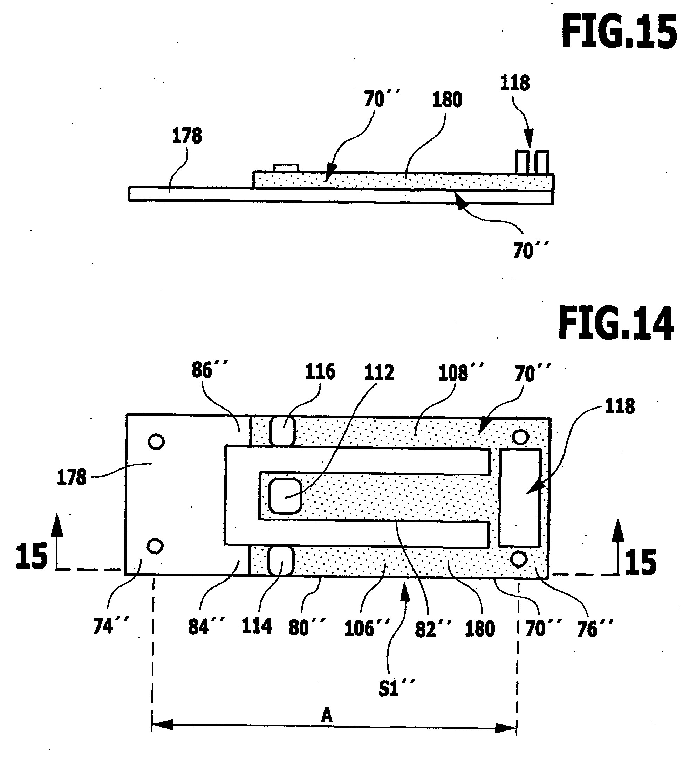

Bei einem dritten Ausführungsbeispiel einer erfindungsgemäßen Sensoreinheit, dargestellt in Fig. 14 und 15 sind im Gegensatz zum ersten und zweiten Ausführungsbeispiel die fingerartigen Vorsprünge 84" und 86" am Fixierbereich 74" angeordnet und erstrecken sich in Richtung des Fixierbereichs 76" und am Fixierbereich 76" ist der fingerartige Vorsprung 82" vorgesehen, der zwischen den fingerartigen Vorsprüngen 84" und 86" liegt, in gleicher Weise wie bei dem ersten und zweiten Ausführungsbeispiel beschrieben.

Ferner bilden sich in Fortsetzung der fingerartigen Vorsprünge 84" und 86" erstreckende Bereiche der Sensorbasis 70" die federelastischen Stege 106" und 108", die sich ähnlich dem zweiten Ausführungsbeispiel ungefähr parallel zum fingerartigen Vorsprung 82" erstrecken, der allerdings bei diesem Ausführungsbeispiel ebenfalls in Form eines Arms ausgebildet ist und eine Länge aufweist, die ein Vielfaches, mindestens ein zweifaches oder ein dreifaches der Länge der Vorsprünge 84" und 86" beträgt oder größer ist als ein Drittel des Abstandes A der Fixierbereiche 74" und 76".

Im Gegensatz zum ersten und zweiten Ausführungsbeispiel ist die Sensorbasis 70" als Verbund einer Metallplatte 178, beispielsweise aus Aluminium, mit einer auf dieser angeordneten, jedoch die mechanischen Eigenschaften, insbesondere die elastische Deformation, der Metallplatte 178 nicht beeinträchtigenden Leiterplatte 180 ausgebildet, die sich ausgehend vom Fixierbereich 76" über den als Arm ausgebildeten fingerartigen Vorsprung 82" bis zum ersten Messelement 112 erstreckt und über die federelastischen Stege 106" und 108" jeweils bis zum jeweiligen zweiten Messelement 114 bzw. 116. Dabei sitzen das erste Messelement 112 sowie die zweiten Messelemente 114 und 116 auf der Leiterplatte 180 und sind damit in einfacher Weise auf dieser Leiterplatte 180 fixierbar und durch diese Leiterplatte 180 kontaktierbar, insbesondere in einfacher Weise mit der ebenfalls auf der Leiterplatte 180 sitzenden Sensorschaltung 118 verbindbar.

Durch diesen die Sensorbasis 70 bildenden Verbund zwischen der Metallplatte 178 und der Leiterplatte 180 ist somit die Sensoreinheit S1" gemäß dem dritten Ausführungsbeispiel in einfacher Weise herstellbar und folglich auch kostengünstig ausführbar.

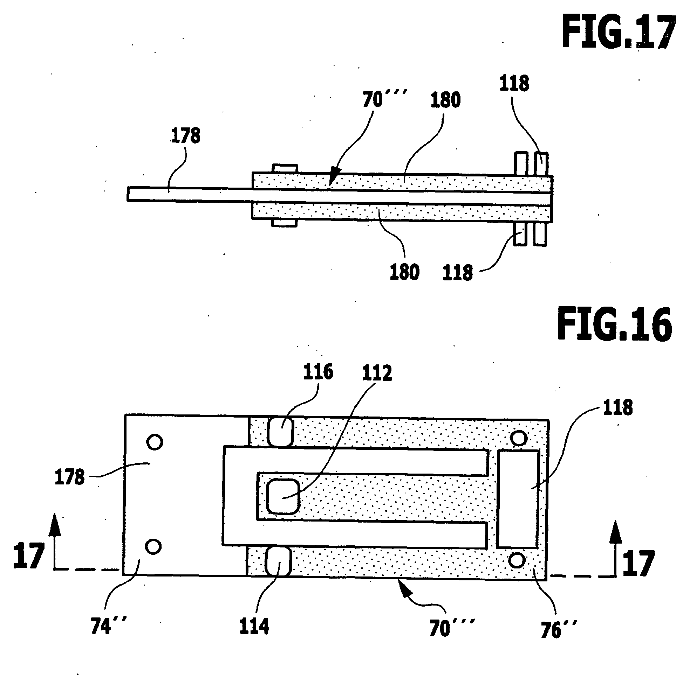

Bei einem vierten Ausführungsbeispiel einer erfindungsgemäßen Sensoreinheit, dargestellt in den Fig. 16 und 17 ist die Sensorbasis 70"' in ähnlicher Weise ausgebildet wie bei dem dritten Ausführungsbeispiel.

Im Gegensatz zum dritten Ausführungsbeispiel ist allerdings die Sensorbasis 70"' durch einen Verbund einer Metallplatte 178 mit auf beiden Seiten angeordneten Leiterplatten 180 gebildet, so dass sowohl auf einer Oberseite der der Metallplatte 178 als auch auf einer Unterseite der Metallplatte 178 ein erstes Messelement 112 und zweite Messelemente 114 und 116 vorgesehen sind, die in gleicher Weise wie bei dem dritten Ausführungsbeispiel beschrieben, mit der Sensorschaltung 118 mittels der Leiterplatte 180 verbindbar sind.

## Patentansprüche

1. Trägereinheit (20) für Kraftfahrzeuge umfassend
eine an einem Heckbereich (14) des Kraftfahrzeugs (10) montierbare Tragstruktur (60) und eine Sensoreinheit (S1, S2) zum Erfassen von auf die Tragstruktur (60) wirkenden und diese elastisch deformierenden Kräften,
**dadurch gekennzeichet,** dass die Sensoreinheit (S1, S2) mit einer Sensorbasis (70) versehen ist, dass die Sensorbasis (70) zwei im Abstand voneinander angeordnete und an Montagebereichen (124, 126) eines elastisch deformierbaren Tragstrukturabschnitts (T) fixierbare Fixierbereiche (74, 76) und einen zwischen den Fixierbereichen (74, 76) angeordneten Transformationsbereich (80) umfasst,
dass der Transformationsbereich (80) die durch die elastische Deformation des Tragstrukturabschnitts (T) erzeugten Bewegungen der Montagebereiche (124, 126) und somit auch der Fixierbereiche (74, 76) relativ zueinander mechanisch in eine Bewegung von Messstellen (M1, M2) des Transformationsbereichs (80) relativ zueinander umsetzt, dass die Bewegung der Messstellen (M1, M2) durch die Sensoreinheit (S1, S2) erfasst wird und dass die Sensoreinheit (S1, S2) eine Abstandsmesseinheit (110) umfasst.

2. Trägereinheit nach Anspruch 1, **dadurch gekennzeichnet, dass** die Bewegungen der Montagebereiche (124, 126) durch eine elastische Deformation des Tragstrukturabschnitts (T) bedingte und in einer Ebene (E1, E2, E3) erfolgende Translations- und Rotationsbewegungen der Montagebereiche (124, 126) und somit auch der Fixierbereiche (74, 76) relativ zueinander umfassen.

3. Trägereinheit nach einem der voranstehenden Ansprüche, **dadurch gekennzeichnet, dass** der Transformationsbereich (80) der Sensorbasis (70) unabhängig von dem zwischen den Montagebereichen (124, 126) liegenden Zwischenbereich (128) des Tragstrukturabschnitts (T) bewegbar ist.

4. Trägereinheit nach einem der voranstehenden Ansprüche, **dadurch gekennzeichnet, dass** der Transformationsbereich (80) der Sensorbasis (70) Bewegungen der Fixierbereiche (74, 76) um quer oder senkrecht zur Sensorbasisfläche (F1) verlaufende Drehachsen (D) in die Bewegungen der Messstellen (M1, M2) des Transformationsbereichs (80) relativ zueinander umsetzt.

5. Trägereinheit nach einem der voranstehenden Ansprüche, **dadurch gekennzeichnet, dass** die Montagebereiche (124, 126) des Tragstrukturabschnitts (T) aufgrund der elastischen Deformation Bewegungen ausführen, die in einer zur Sensorbasisfläche (F1) parallelen Fläche (E1) erfolgen.

6. Trägereinheit nach einem der voranstehenden Ansprüche, **dadurch gekennzeichnet, dass** die Fixierbereiche (74, 76) der Sensorbasis (70) durch mindestens ein elastisch bewegbares Element (106, 108) miteinander verbunden sind und dass insbesondere das elastisch bewegbare Element (106, 108) ein Teil des Transformationsbereichs (80) ist.

7. Trägereinheit nach einem der voranstehenden Ansprüche, **dadurch gekennzeichnet, dass** der Transformationsbereich (80) mindestens einen sich von einem der Fixierbereiche (74, 76) in Richtung des anderen der Fixierbereiche (76, 74) erstreckenden Vorsprung (82, 84, 86) aufweist, der eine der Messstellen (M1, M2) aufweist.

8. Trägereinheit nach Anspruch 7, **dadurch gekennzeichnet, dass** der Transformationsbereich (80) mindestens einen sich von jedem der Fixierbereiche (74, 76) in Richtung des jeweils anderen der Fixierbereiche (76,74) erstreckenden Vorsprung (82. 84, 86) aufweist und dass jeder der Vorsprünge (82, 84, 86) mindestens eine der Messstellen (M1, M2) aufweist und dass insbesondere die Vorsprünge (82, 84, 86) einander zugewandte Abschnitte (92, 94, 96, 98) aufweisen, welchen die Messstellen (M1, M2) zugeordnet sind.

9. Trägereinheit nach Anspruch 8, **dadurch gekennzeichnet, dass** die Vorsprünge (82, 84, 86) im Abstand voneinander verlaufende Abschnitte (92, 94, 96, 98) aufweisen und dass diesen Abschnitten die Messstellen (M1, M2) zugeordnet sind.

10. Trägereinheit nach einem der Ansprüche 7 bis 9, **dadurch gekennzeichnet, dass** einer der Vorsprünge (82) als Arm ausgebildet ist und dass insbesondere die Messstelle (M1) in einem maximal von dem den Arm (82) tragenden Fixierbereich (74) beabstandeten Armbereich angeordnet ist.

11. Trägereinheit nach einem der voranstehenden Ansprüche, **dadurch gekennzeichnet, dass** die Abstandsmesseinheit (110) den Abstand der Messstellen (M1, M2) mechanisch berührungslos erfasst.

12. Trägereinheit nach einem der voranstehenden Ansprüche, **dadurch gekennzeichnet, dass** die Abstandsmesseinheit (110) an jeder der Messstellen (M1, M2) eines von zwei zusammenwirkenden Messelementen (112, 114, 116) aufweist.

13. Trägereinheit nach Anspruch 12, **dadurch gekennzeichnet, dass** die Abstandsmesseinheit (110) eine Abstandsmessung aufgrund einer Magnetfelderfassung durchführt und dass insbesondere die Abstandsmesseinheit (110) ein magnetfelderzeugendes Messelement (112) und ein magnetfeldmessendes Messelement (114, 116) umfasst.

14. Trägereinheit nach einem der voranstehenden Ansprüche, **dadurch gekennzeichnet, dass** die Sensorbasis (70) eine Leiterplatte (180) zur Aufnahme einer Sensorschaltung (118) der Sensoreinheit (S1, S2) umfasst und dass insbesondere die Sensorbasis als Verbundbautell aus einer Trägerplatte (178) und einer Leiterplatte (180) ausgebildet ist.

15. Trägereinheit nach Anspruch 14, **dadurch gekennzeichnet, dass** sich die Leiterplatte (180) bis zu den Messstelle (M1, M2) erstreckt und dass auf der Leiterplatte (180) die Elemente der Abstandsmesseinheit (110) an den Messstellen (M1, M2) angeordnet sind.

16. Trägereinheit nach einem der voranstehenden Ansprüche, **dadurch gekennzeichnet, dass** eine Auswerteeinheit (50) zur Ermittlung der Kraft aus von der Sensoreinheit (S1, S2) erfassten Bewegungen der Messstellen (M1, M2) vorgesehen ist und dass insbesondere die Auswerteeinheit (50) zur Ermittlung der Kraft kraftfreie Sensorsignale (SS1₀) mit kraftbehafteten Sensorsignalen (SS1_{SL}) vergleicht.

## Claims

1. A support unit (20) for motor vehicles, comprising
a supporting structure (60) that can be mounted on a rear end region (14) of the motor vehicle (10), and a sensor unit (S1, S2) for detecting forces acting on the supporting structure (60) and elastically deforming the same, **characterized in that** the sensor unit (S1, S2) is provided with a sensor base (70), that the sensor base (70) comprises two fixation regions (74, 76) which are spaced apart from one another and can be fixed to mounting regions (124, 126) of an elastically deformable supporting structure portion (T), and comprises a transformation region (80) disposed between the fixation regions (74, 76),
that the transformation region (80) mechanically converts the movements of the mounting regions (124, 126) and thus also of the fixation regions (74, 76) relative to one another, said movements being generated by the elastic deformation of the supporting structure portion (T), into a movement of measuring points (M1, M2) of the transformation region (80) relative to one another, that the movement of the measuring points (M1, M2) is detected by the sensor unit (S1, S2), and that the sensor unit (S1, S2) comprises a distance measuring unit (110).

2. A support unit according to Claim 1, **characterized in that** the movements of the mounting regions (124, 126) comprise translational and rotational movements of the mounting regions (124, 126) and thus also of the fixation regions (74, 76) relative to one another, said movements being caused by an elastic deformation of the supporting structure portion (T) and taking place in a plane (E1, E2, E3).

3. A support unit according to any of the preceding claims, **characterized in that** the transformation region (80) of the sensor base (70) can be moved independently of the intermediate region (128), located between the mounting regions (124, 126), of the supporting structure portion (T).

4. A support unit according to any of the preceding claims, **characterized in that** the transformation region (80) of the sensor base (70) converts movements of the fixation regions (74, 76) about pivot axes (D) running transversely or perpendicular to the sensor base surface (F1) into movements of the measuring points (M1, M2) of the transformation region (80) relative to one another.

5. A support unit according to any of the preceding claims, **characterized in that** due to the elastic deformation, the mounting regions (124, 126) of the supporting structure portion (T) perform movements which take place in a surface (E1) parallel to the sensor base surface (F1).

6. A support unit according to any of the preceding claims, **characterized in that** the fixation regions (74, 76) of the sensor base (70) are connected to one another by at least one elastically moveable element (106, 108), and that in particular the elastically movable element (106, 108) is part of the transformation region (80).

7. A support unit according to any of the preceding claims, **characterized in that** the transformation region (80) has at least one projection (82, 84, 86) which extends from one of the fixation regions (74, 76) towards the other one of fixation regions (76, 74) and which comprises one of the measuring points (M1, M2).

8. A support unit according to Claim 7, **characterized in that** the transformation region (80) has at least one projection (82, 84, 86) which extends from each of the fixation regions (74, 76) towards the respective other one of the fixation regions (76, 74), and that each of the projections (82, 84, 86) carries at least one of the measuring points (M1, M2), and that in particular the projections (82, 84, 86) have portions (92, 94, 96, 98) which face one another and with which the measuring points (M1, M2) are associated.

9. A support unit according to Claim 8, **characterized in that** the projections (82, 84, 86) have portions (92, 94, 96, 98) running spaced apart from one another, and that the measuring points (M1, M2) are associated with these portions.

10. A support unit according to any of Claims 7 to 9, **characterized in that** one of the projections (82) is formed as an arm, and that in particular the measuring point (M1) is disposed in an arm region that is at a maximum spacing from the fixation region (74) carrying said arm (82).

11. A support unit according to any of the preceding claims, **characterized in that** the distance measuring unit (110) detects the distance between the measuring points (M1, M2) in a mechanically contactless manner.

12. A support unit according to any of the preceding claims, **characterized in that** at each of the measuring points (M1, M2), the distance measuring unit (110) has one of two interacting measuring elements (112, 114, 116).

13. A support unit according to Claim 12, **characterized in that** the distance measuring unit (110) performs a distance measurement based on magnetic field detection, and that in particular the distance measuring unit (110) comprises a magnetic-field-generating measuring element (112) and a magnetic-field-measuring measuring element (114, 116).

14. A support unit according to any of the preceding claims, **characterized in that** the sensor base (70) comprises a printed circuit board (180) for accommodating a sensor circuit (118) of the sensor unit (S1, S2), and that in particular the sensor base is formed as a composite component from a carrier plate (178) and a printed circuit board (180).

15. A support unit according to Claim 14, **characterized in that** the printed circuit board (180) extends up to the measuring points (M1, M2) and that on the printed circuit board (180), the elements of the distance measuring unit (110) are disposed at the measuring points (M1, M2).

16. A support unit according to any of the preceding claims, **characterized in that** an evaluation unit (50) is provided for determining the force from the movements of the measuring points (M1, M2) detected by the sensor unit (S1, S2), and that in particular, for determining the force, the evaluation unit (50) compares force-free sensor signals (SS1₀) with force-induced sensor signals (SS1_{SL}).

## Revendications

1. Unité de support (20) pour véhicules automobiles, comprenant :
une structure de support (60) à monter dans une région arrière (14) du véhicule automobile (10) et une unité de capteurs (S1, S2) pour détecter des forces agissant sur la structure de support (60) et déformant celle-ci élastiquement ,
**caractérisée en ce que** l'unité de capteurs (S1, S2) est dotée d'une base de capteur (70), **en ce que** la base de capteur (70) comprend deux zones de fixation (74, 76) disposées à distance l'une de l'autre et pouvant se fixer sur des zones de montage (124, 126) d'une partie de structure de support (T) élastiquement déformable et une zone de transformation (80) disposée entre les deux zones de fixation (74, 76),
**en ce que** la zone de transformation (80) convertit les mouvements des zones de montage (124, 126) produits par la déformation élastique de la partie de structure de support (T) et aussi ceux des zones de fixation (74, 76) mécaniquement l'une par rapport à l'autre en un mouvement de points de mesure (M1, M2) de la zone de transformation (80) l'un par rapport à l'autre, **en ce que** le mouvement des points de mesure (M1, M2) est détecté par l'unité de capteurs (S1, S2) et **en ce que** l'unité de capteurs (S1, S2) comprend une unité de mesure de distance (110).

2. Unité de support selon la revendication 1, **caractérisée en ce que** les mouvements des zones de montage (124, 126) provoqués par une déformation élastique de la partie de structure de support (T) et se produisant dans un plan (E1, E2, E3) comprennent des mouvements de translation et de rotation des zones de montage (124, 126) et dès lors aussi des zones de fixation (74, 76) l'une par rapport à l'autre.

3. Unité de support selon l'une quelconque des revendications précédentes, **caractérisée en ce que** la zone de transformation (80) de la base de capteur (70) est déplaçable indépendamment de la zone intermédiaire (128) de la partie de structure de support (T) située entre les zones de montage (124, 126).

4. Unité de support selon l'une quelconque des revendications précédentes, **caractérisée en ce que** la zone de transformation (80) de la base de capteur (70) convertit des mouvements des zones de fixation (74, 76) autour d'axes de rotation (D) s'étendant transversalement ou perpendiculairement à la face de la base de capteur (F1) en mouvements des points de mesure (M1, M2) de la zone de transformation (80) l'un par rapport à l'autre.

5. Unité de support selon l'une quelconque des revendications précédentes, **caractérisée en ce que** les zones de montage (124, 126) de la partie de structure de support (T) exécutent, par suite de la déformation élastique, des mouvements qui se produisent dans une face (E1) parallèle à la face de la base de capteur (F1).

6. Unité de support selon l'une quelconque des revendications précédentes, **caractérisée en ce que** les zones de fixation (74, 76) de la base de capteur (70) sont reliées l'une à l'autre par au moins un élément déplaçable élastiquement (106, 108) et **en ce que** l'élément déplaçable élastiquement (106, 108) est en particulier une partie de la zone de transformation (80).

7. Unité de support selon l'une quelconque des revendications précédentes, **caractérisée en ce que** la zone de transformation (80) présente au moins une saillie (82, 84, 86) s'étendant d'une des zones de fixation (74, 76) en direction de l'autre des zones de fixation (76, 74), et qui présente un des points de mesure (M1, M2).

8. Unité de support selon la revendication 7, **caractérisée en ce que** la zone de transformation (80) présente au moins une saillie (82, 84, 86) s'étendant de chacune des zones de fixation (74, 76) en direction respectivement de l'autre des zones de fixation (76, 74) et **en ce que** chacune des saillies (82, 84, 86) présente au moins un des points de mesure (M1, M2) et **en ce que** les saillies (82, 84, 86) présentent en particulier des parties (92, 94, 96, 98) tournées l'une vers l'autre, auxquelles les points de mesure (M1, M2) sont associés.

9. Unité de support selon la revendication 8, **caractérisée en ce que** les saillies (82, 84, 86) présentent des parties (92, 94, 96, 98) s'étendant à distance l'une de l'autre et **en ce que** les points de mesure (M1, M2) sont associés à ces parties.

10. Unité de support selon l'une quelconque des revendications 7 à 9, **caractérisée en ce qu'**une des saillies (82) est configurée en forme de bras et **en ce qu'**en particulier le point de mesure (M1) est disposé dans une région du bras espacée au maximum de la zone de fixation (74) portant le bras (82).

11. Unité de support selon l'une quelconque des revendications précédentes, **caractérisée en ce que** l'unité de mesure de distance (110) détecte mécaniquement sans contact la distance des points de mesure (M1, M2).

12. Unité de support selon l'une quelconque des revendications précédentes, **caractérisée en ce que** l'unité de mesure de distance (110) présente à chacun des points de mesure (M1, M2) un de deux éléments de mesure qui coopèrent (112, 114, 116).

13. Unité de support selon la revendication 12, **caractérisée en ce que** l'unité de mesure de distance (110) exécute une mesure de distance sur la base d'une détection de champ magnétique et **en ce que** l'unité de mesure de distance (110) comprend en particulier un élément de mesure (112) produisant un champ magnétique et un élément de mesure (114, 116) mesurant un champ magnétique.

14. Unité de support selon l'une quelconque des revendications précédentes, **caractérisée en ce que** la base de capteur (70) comprend une plaquette de circuits imprimés (180) destinée à recevoir un circuit de capteur (118) de l'unité de capteurs (S1, S2) et **en ce que** la base de capteur est configurée en particulier sous forme de composant composite constitué d'une plaque de support (178) et d'une plaquette de circuits imprimés (180).

15. Unité de support selon la revendication 14, **caractérisée en ce que** la plaquette de circuits imprimés (180) s'étend jusqu'aux points de mesure (M1, M2) et **en ce que** les éléments de l'unité de mesure de distance (110) sont disposés aux points de mesure (M1, M2) sur la plaquette de circuits imprimés (180).

16. Unité de support selon l'une quelconque des revendications précédentes, **caractérisée en ce qu'**il est prévu une unité d'exploitation (50) pour la détermination de la force à partir de mouvements des points de mesure (M1, M2) détectés par l'unité de capteurs (S1, S2) et **en ce que** l'unité d'exploitation (50) compare notamment des signaux de capteurs en l'absence de forces (SS1₀) avec des signaux de capteurs en présence de forces (SS1_{SL}) pour la détermination de la force.
